# EUROPÄISCHE PATENTSCHRIFT

(11) **EP 2 235 395 B1**
(45) Veröffentlichungstag und Bekanntmachung des Hinweises auf die Patenterteilung: **16.11.2011**
(21) Anmeldenummer: 09703393.0
(22) Anmeldetag: 23.01.2009
(51) Int. Cl.: F16G 11/00

(54) **ABSCHLUSSKAPPE FÜR EIN ANTRIEBSKABEL, ANTRIEBSKABEL, VERFAHREN ZUR HERSTELLUNG EINER ABSCHLUSSKAPPE SOWIE VERFAHREN ZUR HERSTELLUNG EINES ANTRIEBSKABELS**
TERMINUS CAP FOR A DRIVE CABLE, DRIVE CABLE, METHOD FOR THE PRODUCTION OF A TERMINUS CAP, AND METHOD FOR THE PRODUCTION OF A DRIVE CABLE
CAPUCHON DE RECOUVREMENT POUR CABLE DE COMMANDE, CABLE DE COMMANDE, PROCEDE DE FABRICATION D'UN CAPUCHON DE RECOUVREMENT ET PROCEDE DE FABRICATION D'UN CABLE DE COMMANDE

(30) Priorität: 24.01.2008 DE 102008005983; 06.05.2008 DE 102008022313
(43) Veröffentlichungstag der Anmeldung: 06.10.2010
(73) Patentinhaber: Meflex Telecontrol Gmbh & Co. Kg, 25630 Ehringshausen (DE)
(72) Erfinder: ABENDROTH, Bernd, 35606 Solms (DE); KÜSTER, Klaus, 35830 Ehringshausen (DE)
(74) Vertreter: Müller, Eckhard
(86) Internationale Anmeldenummer: PCT/EP2009/000445
(87) Internationale Veröffentlichungsnummer: WO 2009/092608

(56) Entgegenhaltungen:
- EP-A- 1 820 999
- DE-A1- 10 249 845
- DE-U1- 29 705 766
- DE-U1-202005 003 363
- FR-A- 2 624 941
- GB-A- 2 418 713
- US-A- 231 751
- US-A- 5 281 041

## Beschreibung

### Technisches Gebiet

Die Erfindung betrifft eine Abschlusskappe für ein Antriebskabel, welches insbesondere in Kraftfahrzeugen, beispielsweise bei Hebe- und/oder Schiebedächern oder bei Rollos, beispielsweise Sonnenschutzrollos, zum Einsatz kommt. Die Erfindung betrifft weiterhin ein Antriebskabel mit einer derartigen Abschlusskappe sowie ein Verfahren zur Herstellung einer Abschlusskappe und ein Verfahren zur Herstellung eines Antriebskabels.

### Stand der Technik

Antriebs- oder auch Steigungskabel der vorgenannten Art sind beispielsweise aus der EP 0 409 103 A2 oder der EP 0 181 995 A2 bekannt. Derartige Antriebskabel werden bevorzugt bei Hebe- und/oder Schiebedächern von Kraftfahrzeugen eingesetzt, wobei die Antriebskabel meist mittels einer motorangetriebenen Schnecke axial verstellbar sind und wobei die Antriebskabel an einem zu verstellenden Bauteil, beispielsweise dem Schiebedach befestigt sind.

Antriebskabel werden meist aus aus mehreren Litzen bestehenden Metallseilen mit aufgebrachten Steigungswendeln als Endlosware hergestellt und müssen anschließend auf die benötigte Länge abgelängt werden. Die dabei entstehenden Antriebskabelenden neigen aufgrund der losen Einzeldrähte des Kabels zum Aufspleißen.

Ein weiteres Problem der bekannten Antriebskabel ist, dass sie in montiertem Zustand an den Enden zum Klappern neigen.

Zur Lösung dieser Probleme ist im Stand der Technik bekannt, die Antriebskabel an ihrem Antriebskabelende mit einer Metallhülse zu versehen. Diese Metallhülse wird üblicherweise aufgehämmert. Es hat sich gezeigt, dass mit dieser Lösung wird zwar ein Aufspleißen des Antriebskabelendes wirkungsvoll verhindert werden kann, allerdings neigt das Antriebskabel an seinem Ende aufgrund des verwendeten Metalls nach wie vor im eingebauten Zustand zum Klappern.

Zur Behebung des Klapperproblems bei Metallhülsen wurde alternativ angedacht, statt einer Metallhülse eine Hülse aus Kunststoff vorzusehen. Da sich derartige vorgefertigte Kunststoffhülsen meist schlecht durch mechanische Verfahren an den Antriebskabelenden befestigen lassen, wurde angedacht, die Kunststoffhülsen direkt an das Antriebskabelende anzuspritzen. Es stellte sich jedoch heraus, dass die Antriebskabelenden beim Ablängen scharfe Grate ausbilden können die gespritzte Hülse beschädigen können. Daher ist es erforderlich, das Antriebskabel anzuschleifen, um den Grat zu entfernen. Dieser zusätzliche Arbeitsschritt verteuert ein entsprechendes Antriebskabel.

Weiterhin hat sich herausgestellt, dass eine direkt aufgespritzte Kunststoffhülse häufig schlecht anhaftet, da dem Antriebskabel von der Produktion häufig Ölreste anhaften. Daher muss sichergestellt werden, dass zumindest die Antriebskabelenden frei von Ölen sind, was durch Änderungen der Seilproduktionsverfahren oder durch zusätzliche Arbeitsschritte zur Entfettung geschehen kann.

Ein weiteres Problem der aufgespritzten Abschlusshülsen aus Kunststoff ist, dass das aufgespritzte Kunststoffmaterial durch den erforderlichen hohen Spritzdruck dazu neigt, entlang des oder der aufgebrachten Steigungswendel zu wandern und dort auszuhärten. Das am Steigungswendel befindliche Kunststoffmaterial kann abspreizen und das abgespreizte Material dann ebenfalls wieder Ursache für Klappergeräusche sein.

Die DE 88 10 699 U1 offenbart ein Anschlussstück für Seilzüge mit einem Anschlussrohr zur Verbindung mit einem Drahtseil und einer daran angebrachten, aus hartelastischem Kunststoff spritzgegossene Öse zur Verwendung zur Betätigung von Getrieben.

Die DE 10 2005 006 432 A1 offenbart eine Halteanordnung zum Anheben und Absenken eines Bauteils, insbesondere einer Laderaumabdeckung eines Fahrzeuges mit einem ersten Halteelement, das mit einem Zugelement verbunden ist, welches mit einem zweiten Halteelement kraftschlüssig miteinander derart verklemmbar ist, dass die Klemmverbindung zwischen den Halteelementen bei einer vorbestimmten Belastung lösbar ist.

### Aufgabe

Aufgabe der Erfindung ist damit, eine Abschlusskappe für ein Antriebskabel, ein Antriebskabel, ein Verfahren zur Herstellung einer Abschlusskappe sowie ein Verfahren zur Herstellung eines Antriebskabels anzugeben, welche es ermöglichen, ein Antriebskabelende wirkungsvoll vor dem Aufspleißen zu schützen und gleichzeitig die Klapperneigung der Antriebskabel wirkungsvoll zu verringern, wobei die Abschlusskappe und die Antriebskabel zusätzlich kostengünstig herstellbar sein sollen.

### Darstellung der Erfindung

Die Erfindung wird gelöst durch eine Abschlusskappe in Kombination mit einem Antriebskabel gemäß dem Anspruch 1, ein Verfahren zur Herstellung eines Antriebskabels in Kombination mit einer Abschlusskappe.

Gemäß dem ersten Erfindungsgedanken wird eine Abschlusskappe für ein Antriebskabel vorgesehen, welches insbesondere in Kraftfahrzeugen einsetzbar ist, insbesondere bei Hebe- und/oder Schiebedächern oder Rollos, insbesondere Sonnenschutzrollos. Die Abschlusskappe weist zwei Abschnitte auf, nämlich einen kaltverformbaren Anschlussabschnitt zum Anschluss der Abschlusskappe an das Antriebskabel sowie einen sich an den Anschlussabschnitt anschließenden Endabschnitt aus Kunststoff. Der Endabschnitt und der Anschlussabschnitt bilden somit zusammen die Abschlusskappe.

Der Anschlussabschnitt weist eine zum Endabschnitt hin weisende Öffnung auf, wobei der Endabschnitt bevorzugt teilweise durch die Öffnung in den Anschlussabschnitt eindringt und so eine formschlüssige Verbindung zwischen Anschlussabschnitt und Endabschnitt ermöglicht. Die Öffnung ist bevorzugt radialsymmetrisch ausgebildet und angeordnet. Mit Hilfe einer derartigen Öffnung wird das Befestigen des Endabschnittes an dem Anschlussabschnitt erleichtert.

Eine derartige Abschlusskappe ermöglicht es, ein Antriebskabel gleichzeitig wirkungsvoll gegen Aufspleißen und gegen Klappern zu sichern, wobei durch den kaltverformbaren Anschlussabschnitt einerseits eine sehr gute Anbindung der Abschlusskappe an das Antriebskabel erreicht wird, da die Abschlusskappe eine form- und reibschlüssige Verbindung mit dem Antriebskabel eingeht. Die Verbindung kann zum Beispiel gehämmert, gelötet oder gequetscht werden. Andererseits weist das Antriebskabel durch den Endabschnitt aus Kunststoff eine geringe Klapperneigung auf, da Kunststoff sich als guter Schallisolator herausgestellt hat.

Eine derartige Abschlusskappe ist darüber hinaus insbesondere nach dem später beschriebenen erfindungsgemäßen Verfahren kostengünstig herstellbar. Ein weiterer Vorteil der erfindungsgemäßen Abschlusskappe ist, dass eine Vorbehandlung des durch Ablängen entstandenen Antriebskabelendes, so wie Schleifen oder Entfetten, nicht erforderlich ist, da die Abschlusskappe ohne Schwierigkeiten über das unbearbeitete Antriebskabelende gestülpt werden kann.

Im Rahmen der Erfindung ist es weiterhin möglich, statt eines Kunststoffs als Material für den Endabschnitt weitere aus dem Stand der Technik bekannte Materialien zu nehmen, welche eine geringe Klapperneigung aufweisen, so zum Beispiel Naturmaterialien, wie etwa Kork oder Gummi oder dergleichen, oder andere Materialien, z.B. Schaumstoffe, Elastomere und dergleichen mehr.

Ein besonders bevorzugtes Material für den Anschlussabschnitt der Abschlusskappe ist Metall. Metall lässt sich besonders einfach verarbeiten, z.B. durch Tiefziehen, und ist darüber hinaus preiswert. Weiterhin lässt sich Metall durch Hämmern verformen, was die Montage der Abschlusskappe erleichtert.

Eine weitere vorteilhafte Ausgestaltung sieht vor, dass der Endabschnitt aus einem Thermoplast, beispielsweise POM, PA oder PP besteht. Thermoplasten lassen sich sehr gut durch Spritzverfahren verarbeiten.

Weiterhin ist bevorzugt, dass die Abschlusskappe im Wesentlichen radialsymmetrisch ausgebildet ist. Dabei können der Anschlussabschnitt als auch der Endabschnitt radialsymmetrisch ausgebildet sein und entlang einer gemeinsamen Symmetrieachse aneinander befestigt sein. Dies erleichtert die Montage der Abschlusskappe an dem Antriebskabel, insbesondere durch Hämmern.

Alternativ kann der Anschlussabschnitt, insbesondere der Endabschnitt radial verteilt Stege aufweisen. Dies kann die Klapperneigung der Antriebskabel reduzieren und den Einbau der Antriebskabel erleichtern.

Nach einer weiteren vorteilhaften Ausgestaltung ist vorgesehen, dass der Endabschnitt an den Anschlussabschnitt angespritzt ist. Auf diese Weise lässt sich die Abschlusskappe besonders einfach und kostengünstig herstellen, wobei eine sichere und formgenaue Herstellung der Abschlusskappe gewährleistet werden kann.

Weiterhin kann mit Vorteil vorgesehen werden, dass der Anschlussabschnitt zum Endabschnitt hin verjüngend ausgebildet ist. Dies ermöglicht einerseits das An- bzw. Aufbringen des Endabschnitts an dem Anschlussabschnitt, ohne dass der Endabschnitt umfangsseitig wesentlich über den Durchmesser des Anschlussabschnittes hinaus ragt und die Abschlusskappe dadurch einen unpraktikabel großen Durchmesser annimmt und andererseits eine besonders sichere Verbindung zwischen Anschlussabschnitt und Endabschnitt auch bei Verformungen des Anschlussabschnittes zur Befestigung des Anschlussabschnittes an dem Antriebskabelende.

Bevorzugt kann vorgesehen werden, dass die Abschlusskappe an einem von dem Endabschnitt wegweisenden Ende des Anschlussabschnitts erweitert ausgebildet ist. Dadurch wird das Einführen des Antriebskabelendes in die Abschlusskappe erleichtert.

Nach einer weiteren vorteilhaften Ausgestaltung der Erfindung ist der Endabschnitt zweistückig ausgebildet und wird bei der Montage der Anschlusskappe stoffschlüssig zu einem einstückigen Endabschnitt verbunden. Dies erleichtert die Montage des Endabschnittes.

Eine weitere Ausgestaltung der erfindungsgemäßen Abschlusskappe sieht mit Vorteil vor, dass der Endabschnitt zum Anschlussabschnitt hin geschlitzt ausgebildet ist. Damit lässt sich der Endabschnitt besonders leicht an dem Anschlussabschnitt befestigen, indem der Endabschnitt in den Anschlussabschnitt eingeführt wird und der geschlitzte Bereich des Endabschnittes derart auseinandergebogen und dauerhaft verformt wird, dass ein Formschluss zwischen Endabschnitt und Anschlussabschnitt entsteht.

Wenn der Endabschnitt einen vorderen Bereich und einen hinteren Bereich aufweist, wobei der hintere Bereich zum Einführen in den Anschlussabschnitt vorgesehen ist, kann eine bessere Halterung des Endabschnitts in dem Anschlussabschnitt erreicht werden, wenn der Anschlussabschnitt eine zum Einbringen des Endabschnitts vorgesehene Öffnung mit einem Durchmesser aufweist, der kleiner ist als ein Durchmesser des hinteren Teils des Endabschnitts. Der hintere Teil des Endabschnitts wird dadurch in dem Anschlussabschnitt festgeklemmt. Dabei kann in dem hinteren Teil des Endabschnitts eine Einschnürung vorgesehen sein, die ein Einrasten ermöglicht. Durch Hämmern des Anschlussabschnittes nach Einführung des Endabschnittes lässt sich der Verbund zwischen Anschlussabschnitt und Endabschnitt weiter verbessern.

Ein weiterer unabhängiger Gegenstand der Erfindung betrifft ein Antriebskabel, das eine Abschlusskappe gemäß der vorbeschriebenen Erfindung aufweist. Derartige Antriebskabel sind kostengünstig herstellbar und vereinen hohe Qualität mit geringer Klapperneigung.

Ein weiterer unabhängiger Gegenstand der Erfindung betrifft ein Verfahren zur Herstellung einer Abschlusskappe gemäß der vorbeschriebenen Erfindung. Das erfindungsgemäße Verfahren sieht das Bereithalten eines Anschlussabschnitts und das Befestigen eines Endabschnitts an den Anschlussabschnitt vor. Eine nach diesem Verfahren hergestellte Abschlusskappe ist sehr stabil, lässt sich leicht und sicher an dem Antriebskabelende befestigen, neigt nicht zum Klappern und ist darüber hinaus preiswert herstellbar.

Besonders vorteilhaft wird der Endabschnitt durch Einbringen, Ultraschallschweißen, thermisches Anstauchen, Kunststoff-Kaltverformen, Eintreiben oder durch direktes Anspritzen an den Anschlussabschnitt befestigt. Diese Verfahren ermöglichen ein besonders kostengünstiges Herstellen der Abschlusskappen bei gleichzeitig hoher Qualität.

Weiterhin kann mit Vorteil vorgesehen werden, dass Endabschnitt und Anschlussabschnitt separat gefertigt und miteinander verclipst werden. Dadurch lässt sich eine besonders leichte Montage bewerkstelligen.

Weiterhin kann vorgesehen werden, dass Endabschnitt und Anschlussabschnitt separat gefertigt werden und der Endabschnitt in dem Anschlussabschnitt verrastet wird. Dadurch lässt sich eine besonders einfache Befestigung des Endabschnitts im Anschlussabschnitt erreichen.

Nach einem letzten unabhängigen Gedanken der Erfindung wird ein Verfahren zur Herstellung eines Antriebskabels vorgesehen, welches insbesondere in Kraftfahrzeugen zum Einsatz kommt, insbesondere bei Hebe- und/oder Schiebedächern oder bei Rollos, z.B. Sonnenschutzrollos. Bei dem erfindungsgemäßen Verfahren wird ein Kabelabschnitt bereitgehalten und eine Abschlusskappe, die gemäß der vorbeschriebenen Erfindung ausgestaltet ist, an einem Antriebskabelende des Antriebskabels befestigt. Dieses Verfahren lässt sich besonders leicht durchführen und ermöglicht die Herstellung besonders hochwertiger Antriebskabel.

Eine vorteilhafte Ausgestaltung des erfindungsgemäßen Verfahrens sieht vor, dass die Befestigung der Abschlusskappe an dem Antriebskabelende durch Hämmern vorgenommen wird. Hämmern lässt sich gegenüber anderen möglichen Befestigungsarten besonders leicht durchführen und gewährleistet eine zuverlässige Verbindung der Anschlusskappe an dem Antriebskabelende.

Vorteilhafterweise wird der Anschlussabschnitt an dem Antriebskabelende befestigt und der Endabschnitt an dem bereits befestigten Anschlussabschnitt angespritzt. Dies ermöglicht eine Fertigung mit besonders geringem Ausschuss, da der Anschlussabschnitt bereits seine endgültige Form angenommen hat, bevor der Endabschnitt angespritzt wird. Andernfalls kann es durch die Verformung des Anschlussabschnitts in seltenen Fällen zu einem Abplatzen des Endabschnittes kommen, insbesondere wenn die Abschlusskappe beim Hämmern nicht sauber in die Vorrichtung zum Hämmern eingelegt ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Kurzbeschreibung der Zeichnungen

Es zeigen schematisch:
- Fig. 1: eine erfindungsgemäße Abschlusskappe;
- Fig. 2: einen Querschnitt durch die Abschlusskappe aus Figur 1 gemäß der Schnittlinie A-A;
- Fig. 3: einen Querschnitt durch eine alternative Ausgestaltung einer erfindungsgemäßen Abschlusskappe;
- Fig. 4: einen Endabschnitt einer erfindungsgemäßen Abschlusskappe;
- Fig. 5: eine dritte Ausführungsform einer erfindungsgemäßen Abschlusskappe;
- Fig. 6A bis 6C: ein Antriebskabel mit einer herkömmlichen Metallhülse in einer Draufsicht (Fig. 6A), einem Querschnitt (Fig. 6B) durch ein Antriebskabel sowie ein Querschnitt durch eine bekannte Hülse (Fig. 6C);
- Fig. 7: ein Antriebskabel gemäß dem Stand der Technik mit einem angespritzten Endabschnitt, sowie
- Fig. 8a, b: eine vierte Ausführungsform einer erfindungsgemäßen Abschlusskappe.

### Ausführungsbeispiele

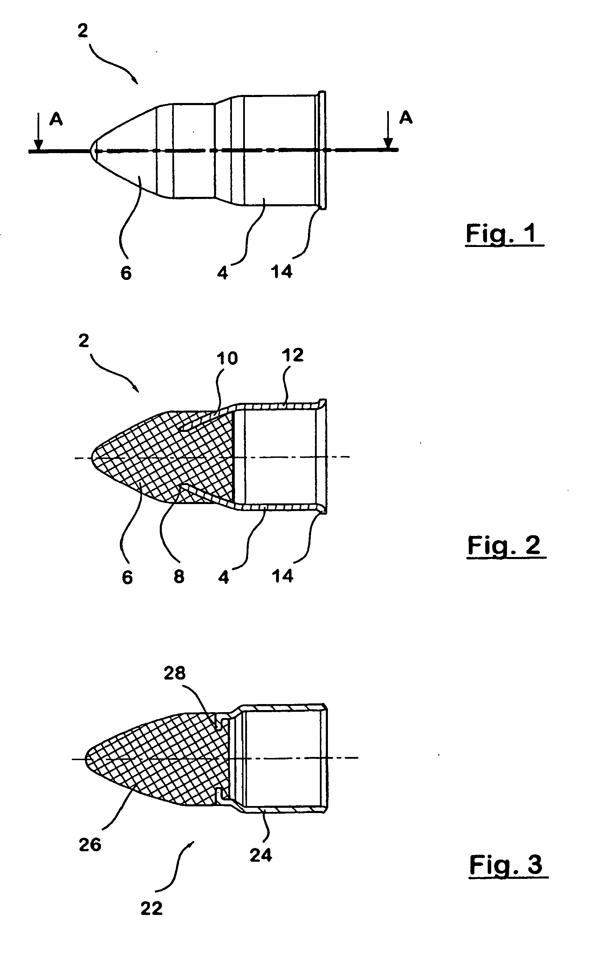

Figur 1 zeigt eine erfindungsgemäße Abschlusskappe 2 mit einem Anschlussabschnitt 4 sowie einem Endabschnitt 6. Die erfindungsgemäße Abschlusskappe 2 ist im Wesentlichen rotationssymmetrisch ausgestaltet und verjüngt sich stufenweise zur vom Antriebskabel wegweisenden Seite hin.

Der Anschlussabschnitt 4 besteht aus Metall, welches sich gut kaltverformen lässt. Der Anschlussabschnitt 4 dient zum Einführen eines nicht dargestellten Antriebskabelendes in die Abschlusskappe 2 und zur Befestigung der Abschlusskappe 2 an dem Antriebskabelende. Der sichtbare Teil des Anschlussabschnittes 4 ist überwiegend zylindrisch gestaltet, wodurch sich der Anschlussabschnitt 4 gut z.B. durch Hämmern an dem Antriebskabelende befestigen lässt.

Der Endabschnitt 6 besteht aus Kunststoff und ist im vorderen Endbereich konisch verjüngend mit einer runden Spitze ausgebildet, wodurch die Montage eines Antriebskabels, das mit einer derartigen Anschlusskappe 2 versehen ist, erleichtert wird.

In Figur 2 ist ein Querschnitt durch eine erfindungsgemäße Abschlusskappe 2 gemäß der Schnittlinie A-A aus Figur 1 dargestellt.

Der Anschlussabschnitt 4 weist zum Endabschnitt 6 hin eine Öffnung 8 auf, die im Wesentlichen kreisförmig und axialsymmetrisch angeordnet ist. Der Anschlussabschnitt 4 weist einen vorderen Bereich 10 auf, der gegenüber dem Durchmesser eines im Wesentlichen zylindrischen hinteren Abschnitts 12 sich nach vorne hin verjüngt. Mit der Öffnung 8 und dem verjüngenden vorderen Bereich 10 kann erreicht werden, dass der Endabschnitt 6 beim Hämmern des Anschlussbereiches 4 zur Befestigung der Anschlusskappe 2 an das Antriebskabel lediglich verbogen und nicht geschert wird. Die Verformung des Anschlussbereiches 4 setzt sich nämlich über den gesamten Anschlussbereich 4 fort und führt zu einer Kompression des vorderen, nicht gehämmerten Bereiches 10. Dadurch lässt sich die Ausschussrate beim Befestigen der Abschlusskappen 2 an den Kabeln verringern, da der Kunststoff des Abschlussbereiches 6 bei Scherkräften eher zum Platzen neigt als bei Verformungen.

Der Anschlussabschnitt 4 weist am zum Kabel gerichteten Ende eine Erweiterung 14 auf, die das Einführen des Antriebskabels in den Anschlussabschnitt 4 erleichtert.

Der Anschlussabschnitt 4 und der Endabschnitt 6 können bei dem in den Figuren 1 und 2 dargestellten Ausführungsformen durch verschiedene Verfahren miteinander verbunden werden. Eine Möglichkeit ist das direkte Anspritzen des Kunststoffs an das bereits fertige, z.B. durch Tiefziehen hergestellte Anschusselement 4. Dazu wird das Anschlusselement 4 auf einen Stempel gesetzt und von oben durch die Öffnung 8 mit dem thermoplastischen Kunststoff bespritzt, sodass dieser bei der Urformung die Form des Endabschnittes 6 annimmt und gleichzeitig unabhängig von möglichen Toleranzen des Anschlussabschnittes 4 stets eine sichere formschlüssige Verbindung ergibt.

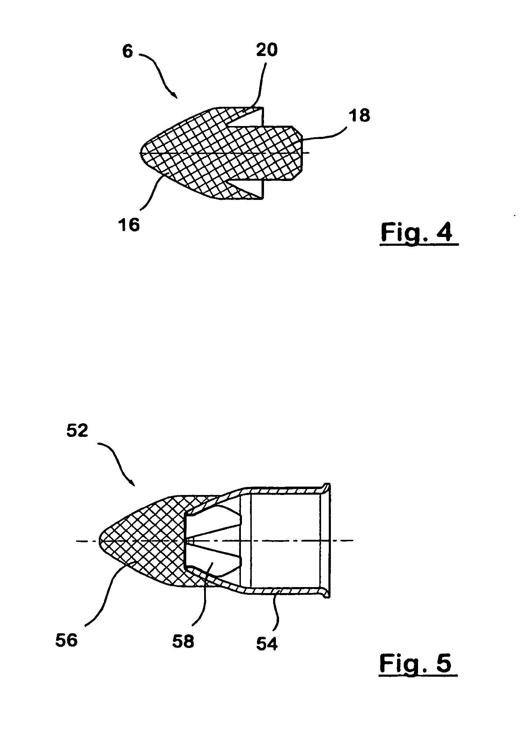

Weitere Möglichkeiten sind im Zusammenhang mit separat vorgefertigten aus Kunststoff oder dergleichen bestehenden Endabschnitten 6 im Zusammenhang mit Figur 4 erläutert.

Figur 3 zeigt eine alternative Ausführungsform zu der in den Figuren 1 und 2 dargestellten Ausführungsform in einer Querschnittsdarstellung. Die Abschlusskappe 22 weist einen Anschlussabschnitt 24 sowie einen Endabschnitt 26 auf, wobei der Anschlussabschnitt 24 in dem zum Endabschnitt hin weisenden Bereich nicht nach vorne hin konisch zulaufend ausgebildet ist, wie die erste beschriebene Ausführungsform, sondern durchgehend zylindrisch mit einem Kragen, der in den Endabschnitt 26 hineinragt und der eine kreisförmige Öffnung 28 aufweist. Der Endabschnitt 26 wird direkt an den Anschlussabschnitt 24 angespritzt.

Figur 4 zeigt eine mögliche Ausführungsform des Endabschnitts 6, wie er für die erste Variante (Figur 1, 2) zum Einsatz kommen kann, wenn der Endabschnitt 6 separat vorgefertigt werden soll.

Der Endabschnitt 6 weist einen vorderen konischen Bereich 16 und einen hinteren zylindrischen Bereich 18 auf. Der vordere Bereich 16 weitet sich auf einen Durchmesser auf, der größer ist als der Durchmesser des hinteren Bereichs 18 und geht mit einer Hinterschneidung 20 in den hinteren Bereich 18 über. Die Hinterschneidung 20 weist im Wesentlichen die Kontur des sich verjüngenden Bereichs 10 des zugehörigen Anschlusselements 4 auf. Der Endabschnitt 6 kann dann in die Öffnung 8 des Anschlusselementes eingesetzt werden und anschließend dauerhaft verformt werden, um eine formschlüssige Verbindung mit dem Anschlussabschnitt einzugehen. Das Verformen des hinteren Bereichs 18 kann durch Ultraschallschweißen, thermisches Anstauchen, Nietverfahren oder durch Kaltverformen mittels eines Stempels vorgenommen werden.

Figur 5 zeigt eine weitere Alternative einer erfindungsgemäßen Abschlusskappe 52. Im Gegensatz zu der in den Figuren 1 und 2 dargestellten ersten Ausführungsform ist ein vorderer Endabschnitt 56, der an einen Anschlussabschnitt 54 angespritzt ist, mittels einem geschlitzten und verformten hinteren Bereich 58 formschlüssig befestigt. Bei dieser Ausgestaltung lässt sich der Endabschnitt 56 durch Clipsen mit dem Anschlussabschnitt 54 verbinden.

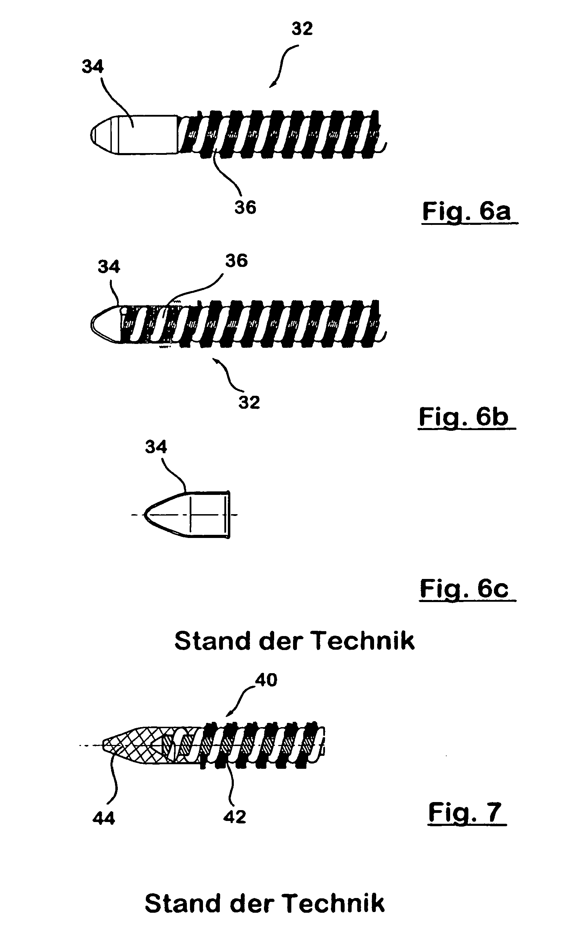

Die Figuren 6a bis 6c zeigen ein aus dem Stand der Technik bekanntes Antriebskabel 32. In Figur 6a ist eine Seitenansicht des Antriebskabels 32 dargestellt. Das Antriebskabel 32 ist an seinem vorderen Ende mit einer Hülse 34 abgeschlossen, um ein Aufspleißen des Antriebskabelendes 36 zu verhindern. Die bekannte Hülse 34 besteht aus Metall und wird durch Hämmern an dem Antriebskabelende 36 befestigt.

In Figur 6b ist ein Querschnitt durch das Kabel aus Figur 6a gezeigt. Das Antriebskabelende 32 ragt bis zum sich konisch verjüngenden Bereich der Abschlusskappe 34 in die Abschlusskappe 34 hinein.

Figur 6c zeigt die aus dem Stand der Technik bekannte Abschlusskappe 34 im Querschnitt. Die Abschlusskappe 34 ist nach vorne hin kegelartig verjüngend ausgebildet. Derartige Abschlusskappen können beispielsweise im Tiefziehverfahren hergestellt werden.

Figur 7 zeigt eine andere aus dem Stand der Technik bekannte Möglichkeit zum Abschluss eines Antriebskabels. An das Antriebskabelende 42 ist eine Kunststoffkappe 44 direkt angespritzt. Dazu muss das Antriebskabelende 42 vorbehandelt werden, insbesondere entgratet; ggf. kann auch eine Reinigung und/oder eine Entfettung nötig sein.

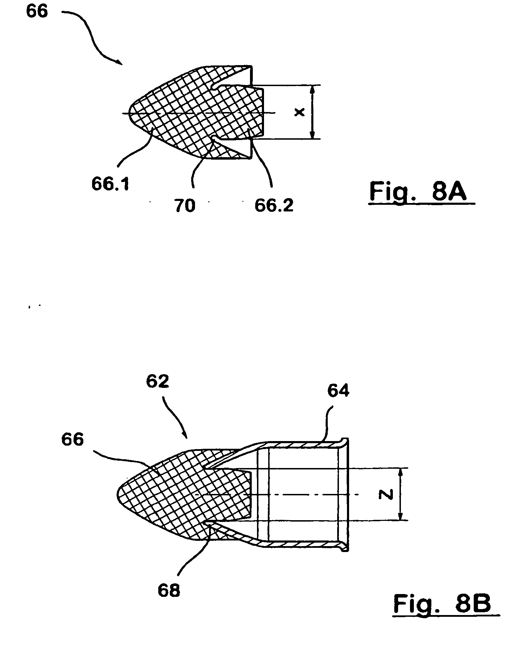

Figur 8a zeigt einen Endabschnitt 66 einer Abschlusskappe gemäß einer vierten Ausführungsform. Der Endabschnitt 66 weist einen vorderen Abschnitt 66.1 sowie einen hinteren Abschnitt 66.2 auf, welcher in einen in Figur 8b dargestellten Anschlussabschnitt 64 in eine dafür vorgesehene Öffnung 68 eingeführt wird.

Die Öffnung 68 des Anschlussabschnitts 64 weist einen Durchmesser Z auf, der kleiner ist als ein größter Durchmesser X des Endabschnitts 66.2. Beim Einführen kann dabei erreicht werden, dass der Endabschnitt 66 fest in der dafür vorgesehenen Öffnung 68 des Anschlussabschnitts 64 sitzt und nicht herausfallen kann. Die Montage kann bei der vierten Ausführungsform durch einfaches Einschieben vorgenommen werden. Eine zusätzliche Verbesserung des Sitzes kann erreicht werden, wenn der Anschlussabschnitt 64 nach dem Einfügen des Endabschnitts 66 gehämmert wird, wodurch sich in bereits zuvor beschriebener Weise der Durchmesser Z der Öffnung 68 des Anschlussabschnitts 64 weiter verringert und eine zusätzliche Klemmwirkung erreicht wird.

Selbstverständlich ist es nicht erforderlich, dass die entsprechenden Bauteile radialsymmetrisch ausgebildet sind. Diese können auch andere Formen annehmen, wie zum Beispiel oval oder eckig oder dergleichen. Dies wird ohne weiteres im Rahmen der konkreten Anforderungen festgelegt.

Der hintere Abschnitt 66.2 des Endabschnitts 66 kann zum vorderen Abschnitt 66.1 eine Einschnürung 70 aufweisen, die den Sitz des Endabschnitts 66 in dem Anschlussabschnitt 64 verbessert. Der Endabschnitt 66 rastet dann in den Anschlussabschnitt 64 ein. Dazu weist die Einschnürung 70 einen Durchmesser auf, der etwa dem Durchmesser Z der Öffnung 68 des Anschlussabschnitts 64 entspricht oder der sogar etwas kleiner ist als jener Durchmesser Z. Eine derartige Einschnürung 70 ist jedoch für die vierte Ausführungsform nicht unbedingt erforderlich.

### Bezugszeichenliste

- 2: Abschlusskappe
- 4: Anschlussabschnitt
- 6: Endabschnitt
- 8: Öffnung
- 10: Vorderer Bereich des Anschlussabschnittes 4
- 12: Hinterer Bereich des Anschlussabschnittes 4
- 14: Erweiterung
- 16: Vorderer Bereich des Endabschnittes 6
- 18: Hinterer Bereich des Endabschnittes 6
- 20: Hinterschneidung
- 22: Abschlusskappe
- 24: Anschlussabschnitt
- 26: Endabschnitt
- 28: Öffnung
- 32: Antriebskabel
- 34: Hülse
- 36: Antriebskabelende
- 40: Antriebskabel
- 42: Antriebskabelende
- 44: Kunststoffkappe
- 52: Abschlusskappe
- 54: Anschlussabschnitt
- 56: Endabschnitt
- 58: Geschlitzter hinterer Bereich
- 62: Abschlusskappe
- 64: Anschlussabschnitt
- 66: Endabschnitt
- 66.1: vorderer Abschnitt
- 66.2: hinterer Abschnitt
- 68: Öffnung
- 70: Einschnürung

- x: Durchmesser Endabschnitt
- z: Durchmesser Anschtussabschnitt

## Patentansprüche

1. Abschlusskappe (2) in Kombination mit einem Antriebskabel (32, 40), insbesondere zum Einsatz in Kraftfahrzeugen, insbesondere bei Hebe- und/oder Schiebedächern oder Sonnenschutzrollos, wobei die Abschlusskappe (2) einen Anschlussabschnitt (4; 24; 54; 64) aufweist, der mit dem Antriebskabel (32, 40) verbunden ist, und mit einem Endabschnitt (6; 26; 56; 66), wobei der Anschlussabschnitt (4; 24; 54; 64) kaltverformt mit dem Antriebskabel (32, 40) verbunden ist und der Anschlussabschnitt (4; 24; 54; 64) eine zum Endabschnitt (6; 26; 56; 66) hin weisende Öffnung (8; 28; 68) aufweist, wobei der Endabschnitt (6; 26; 56; 66) teilweise in die Öffnung (8; 28; 68) eingreift und wobei der Anschlussabschnitt (4; 24; 54; 64) zum Endabschnitt (6; 26; 56; 66) hin verjüngend ausgebildet ist, **dadurch gekennzeichnet, dass** der Endabschnitt (6, 26, 56, 66) aus Kunststoff besteht.

2. Abschlusskappe nach Anspruch 1, **dadurch gekennzeichnet, dass** der Anschlussabschnitt (4; 24; 54; 64) aus Metall oder aus einem kaltverformbaren Kunststoff.

3. Abschlusskappe nach Anspruch 1 oder 2, **dadurch gekennzeichnet, dass** der Endabschnitt (6; 26; 56, 66) aus einem Thermoplast, beispielsweise POM, PA oder PP, besteht.

4. Abschlusskappe nach einem der vorangegangenen Ansprüche, **dadurch gekennzeichnet, dass** sie im Wesentlichen radialsymmetrisch ausgebildet ist.

5. Abschlusskappe nach einem der vorangegangenen Ansprüche, **dadurch gekennzeichnet, dass** die Öffnung (8; 28, 68) bevorzugt radialsymmetrisch ausgebildet und angeordnet ist.

6. Abschlusskappe nach einem der vorangegangenen Ansprüche, **dadurch gekennzeichnet, dass** der Endabschnitt (6) an den Anschlussabschnitt (4) angespritzt ist.

7. Abschlusskappe nach einem der vorangegangenen Ansprüche, **dadurch gekennzeichnet, dass** der Anschlussabschnitt (4; 24; 54; 64) an dem vom Endabschnitt (6; 26; 56; 66) wegweisenden Ende erweitert ausgebildet ist.

8. Abschlusskappe nach einem der vorangegangenen Ansprüche, **dadurch gekennzeichnet, dass** der Endabschnitt (6; 26; 56; 66) zweistückig ausgebildet ist.

9. Abschlusskappe nach einem der vorangegangenen Ansprüche, **dadurch gekennzeichnet, dass** der Endabschnitt (56) einen geschlitzten Bereich (58) aufweist.

10. Abschlusskappe nach einem der vorangegangenen Ansprüche, **dadurch gekennzeichnet, dass** der Endabschnitt (66) einen hinteren Bereich (66.2) aufweist mit einem Durchmesser (X), der größer ist als ein Durchmesser (Z) einer Öffnung (68) des Anschlussabschnitts (64).

11. Abschlusskappe nach Anspruch 10, **dadurch gekennzeichnet, dass** der hintere Bereich (66.2) des Endabschnitts (66) zu einem vorderen Abschnitt (66.1) des Endabschnitts (66) eine Einschnürung (70) aufweist, deren Durchmesser kleiner oder gleich dem Durchmesser (Z) der Öffnung (68) des Anschlussabschnitts (64) ist.

12. Abschlusskappe nach einem der vorhergehenden Ansprüche, **dadurch gekennzeichnet, dass** der Anschlussabschnitt (4; 24; 54; 64) aus einem Thermoplast besteht.

13. Verfahren zur Herstellung eines Antriebskabels (32, 40) in Kombination mit einer Abschlusskappe (2; 22; 52; 62), nach einem der Ansprüche 1 bis 12, insbesondere zum Einsatz in Kraftfahrzeugen, insbesondere bei Hebe- und/oder Schiebedächern oder Sonnenschutzrollos, durch Bereithalten eines Anschlussabschnitts (4; 24; 54; 64) und Befestigen eines Endabschnitts (6; 26; 56; 66) an den Anschlussabschnitt (4; 24; 54; 64), **dadurch gekennzeichnet, dass** die Befestigung der Abschlusskappe (2; 22; 52; 62) an dem Antriebskabelende (36, 42) durch Hämmern vorgenommen wird.

14. Verfahren nach Anspruch 13, **dadurch gekennzeichnet, dass** der Endabschnitt (6; 26; 56; 66) durch Einbringen, Ultraschallschweißen, thermisches Anstauchen, Kunststoffkaltverformen, Eintreiben oder direktes Anspritzen an den Anschlussabschnitt (4; 24; 54; 64) befestigt wird.

15. Verfahren nach Anspruch 13 oder 14, **dadurch gekennzeichnet, dass** der Endabschnitt (6; 26; 56; 66) und der Anschlussabschnitt (4; 24; 54; 64) separat gefertigt werden und Endabschnitt (6; 26; 56; 66) und Anschlussabschnitt (4; 24; 54; 64) miteinander verclipst werden.

16. Verfahren nach Anspruch 14, **dadurch gekennzeichnet, dass** der Endabschnitt (6; 26; 56; 66) an dem bereits befestigten Anschlussabschnitt (4; 24; 54; 64) angespritzt wird.

17. Verfahren nach Anspruch 14, **dadurch gekennzeichnet, dass** der Endabschnitt (66) in den Anschlussabschnitt (64) eingepresst wird, vorzugsweise bis der Endabschnitt (66) in dem Anschlussabschnitt (64) einrastet.

## Claims

1. Terminating cap (2) in combination with a drive cable (32, 40), particularly for use in motor vehicles, particularly with lifting and/or sliding roofs or sun blinds, wherein the terminating cap (2) has a connecting section (4; 24; 54; 64), which is connected with the drive cable (32, 40), and with an end section (6; 26; 56; 66), wherein the connecting section (4; 24; 54; 64) is connected with the drive cable (32, 40) by cold deforming and the connecting section (4; 24; 54; 64) has an opening (8; 28; 68) facing towards the end section (6; 26; 56; 66), wherein the end section (6; 26; 56; 66) partly engages in the opening (8; 28; 68) and wherein the connecting section (4; 24; 54; 64) is formed to taper towards the end section (6; 26; 56; 66), **characterised in that** the end section (6, 26, 56, 66) is made of plastics material.

2. Terminating cap according to claim 1, **characterised in that** the connecting section (4; 24; 54; 64) is of metal or of a cold-deformable plastics material.

3. Terminating cap according to claim 1 or 2, **characterised in that** the end section (6; 26; 56, 66) consists of a thermoplastic material, for example POM, PA or PP.

4. Terminating cap according to any one of the preceding claims, **characterised in that** it is of substantially radially symmetrical construction.

5. Terminating cap according to any one of the preceding claims, **characterised in that** the opening (8; 28, 68) is preferably constructed and arranged to be radially symmetrical.

6. Terminating cap according to any one of the preceding claims, **characterised in that** the end section (6) is injection-moulded on the connecting section (4).

7. Terminating cap according to any one of the preceding claims, **characterised in that** the connecting section (4; 24; 54; 64) is formed to be enlarged at the end facing away from the end section (6; 26; 56; 66).

8. Terminating cap according to any one of the preceding claims, **characterised in that** the end section (6; 26; 56; 66) is of two-part construction.

9. Terminating cap according to any one of the preceding claims, **characterised in that** the end section (56) has a slotted region (58).

10. Terminating cap according to any one of the preceding claims, **characterised in that** the end section (66) has a rear region (66.2) with a diameter (X) larger than a diameter (Z) of an opening (68) of the connecting section (64).

11. Terminating cap according to claim 10, **characterised in that** the rear region (66.2) of the end section (66) has with respect to a front section (66.1) of the end section (66) a constriction (70) with a diameter smaller than or equal to the diameter (Z) of the opening (68) of the connecting section (64).

12. Terminating cap according to any one of the preceding claims, **characterised in that** the connecting section (4; 24; 54; 64) consists of a thermoplastic material.

13. Method of producing a drive cable (32, 40) in combination with a terminating cap (2; 22; 52; 62) according to any one of claims 1 to 12, particularly for use in motor vehicles, particularly with lifting and/or sliding roofs or sun blinds, by providing a connecting section (4; 24; 54; 64) and fastening an end section (6; 26; 56; 66) to the connecting section (4; 24; 54; 66), **characterised in that** the fastening of the terminating cap (2; 22; 52; 62) to the drive cable end (36, 42) is undertaken by hammering.

14. Method according to claim 13, **characterised in that** the end section (6; 26; 56; 66) is fastened to the connecting section (4; 24; 54; 64) by bringing-in, ultrasonic welding, thermal upsetting, plastics material cold deforming, driving in or direct injection-moulding.

15. Method according to claim 13 or 14, **characterised in that** the end section (6; 26; 56; 66) and the connecting section (4; 24; 54; 64) are made separately and the end section (6; 26; 56; 66) and connecting section (4; 24; 54; 64) are clipped together.

16. Method according to claim 14, **characterised in that** the end section (6; 26; 56; 66) is injection-moulded on the already fastened connecting section (4; 24; 54; 64).

17. Method according to claim 14, **characterised in that** the end section (66) is pressed into the connecting section (64), preferably detented up to the end section (66) in the connecting section (64).

## Revendications

1. Capuchon de recouvrement (2) en combinaison avec un câble de commande (32, 40), à utiliser en particulier dans des véhicules automobiles, en particulier pour des toits ouvrants et/ou coulissants ou des pare-soleil, dans lequel le capuchon de recouvrement (2) présente une partie de raccordement (4; 24; 54; 64) qui est assemblée au câble de commande (32, 40), et avec une partie d'extrémité (6; 26; 56; 66), dans lequel la partie de raccordement (4; 24; 54; 64) est assemblée au câble de commande (32, 40) par déformation à froid et la partie de raccordement (4; 24; 54; 64) présente une ouverture (8; 28; 68) orientée vers la partie d'extrémité (6; 26; 56; 66), dans lequel la partie d'extrémité (6; 26; 56; 66) s'engage partiellement dans l'ouverture (8; 28; 68) et dans lequel la partie de raccordement (4; 24; 54; 64) se rétrécit en direction de la partie d'extrémité (6; 26; 56; 66), **caractérisé en ce que** la partie d'extrémité (6; 26; 56; 66) se compose de matière plastique.

2. Capuchon de recouvrement selon la revendication 1, **caractérisé en ce que** la partie de raccordement (4; 24; 54; 64) se compose d'un métal ou d'une matière plastique déformable à froid.

3. Capuchon de raccordement selon la revendication 1 ou 2, **caractérisé en ce que** la partie d'extrémité (6; 26; 56; 66) se compose d'une matière thermoplastique, par exemple de POM, PA ou PP.

4. Capuchon de recouvrement selon l'une quelconque des revendications précédentes, **caractérisé en ce qu'**il présente essentiellement une symétrie radiale.

5. Capuchon de recouvrement selon l'une quelconque des revendications précédentes, **caractérisé en ce que** l'ouverture (8; 28; 68) est configurée et disposée de préférence avec une symétrie radiale.

6. Capuchon de recouvrement selon l'une quelconque des revendications précédentes, **caractérisé en ce que** la partie d'extrémité (6) est formée par projection sur la partie de raccordement (4).

7. Capuchon de recouvrement selon l'une quelconque des revendications précédentes, **caractérisé en ce que** la partie de raccordement (4; 24; 54; 64) est formée de façon élargie sur l'extrémité opposée à la partie d'extrémité (6; 26; 56; 66).

8. Capuchon de recouvrement selon l'une quelconque des revendications précédentes, **caractérisé en ce que** la partie d'extrémité (6; 26; 56; 66) est réalisée en deux parties.

9. Capuchon de recouvrement selon l'une quelconque des revendications précédentes, **caractérisé en ce que** la partie d'extrémité (56) présente une zone fendue (58).

10. Capuchon de recouvrement selon l'une quelconque des revendications précédentes, **caractérisé en ce que** la partie d'extrémité (66) présente une zone arrière (66.2) avec un diamètre (X) qui est plus grand qu'un diamètre (Z) d'une ouverture (68) de la partie de raccordement (64).

11. Capuchon de recouvrement selon la revendication 10, **caractérisé en ce que** la zone arrière (66.2) de la partie d'extrémité (66) présente, en direction d'une partie avant (66.1) de la partie d'extrémité (66), une gorge (70), dont le diamètre est inférieur ou égal au diamètre (Z) de l'ouverture (68) de la partie de raccordement (64).

12. Capuchon de recouvrement selon l'une quelconque des revendications précédentes, **caractérisé en ce que** la partie de raccordement (4; 24; 54; 64) se compose d'une matière thermoplastique.

13. Procédé de fabrication d'un câble de commande (32, 40) en combinaison avec un capuchon de recouvrement (2; 22; 52; 62) selon l'une quelconque des revendications 1 à 12, à utiliser en particulier dans des véhicules automobiles, en particulier pour des toits ouvrants et/ou coulissants ou pour des pare-soleil, par préparation d'une partie de raccordement (4; 24; 54; 64) et fixation d'une partie d'extrémité (6; 26; 56; 66) à la partie de raccordement (4; 24; 54; 64), **caractérisé en ce que** l'on effectue la fixation du capuchon de recouvrement (2; 22; 52; 62) sur l'extrémité du câble de commande (36, 42) par martelage.

14. Procédé selon la revendication 13, **caractérisé en ce que** l'on fixe la partie d'extrémité (6; 26; 56; 66) à la partie de raccordement (4; 24; 54; 64) par insertion, soudage aux ultrasons, refoulement thermique, déformation à froid de matière plastique, enfoncement ou projection directe.

15. Procédé selon la revendication 13 ou 14, **caractérisé en ce que** l'on fabrique séparément la partie d'extrémité (6; 26; 56; 66) et la partie de raccordement (4; 24; 54; 64) et on clipse l'une sur l'autre la partie d'extrémité (6; 26; 56; 66) et la partie de raccordement (4; 24; 54; 64).

16. Procédé selon la revendication 14, **caractérisé en ce que** l'on projette la partie d'extrémité (6; 26; 56; 66) sur la partie de raccordement (4; 24; 54; 64) déjà fixée.

17. Procédé selon la revendication 14, **caractérisé en ce que** l'on presse la partie d'extrémité (66) dans la partie de raccordement (64), de préférence jusqu'à ce que la partie d'extrémité (66) soit accrochée dans la partie de raccordement (64).
